# EUROPÄISCHE PATENTSCHRIFT

(11) **EP 2 309 899 B1**
(45) Veröffentlichungstag und Bekanntmachung des Hinweises auf die Patenterteilung: **04.01.2012**
(21) Anmeldenummer: 09761460.6
(22) Anmeldetag: 09.06.2009
(51) Int. Cl.: A47J 31/06

(54) **BRÜHKAMMER UND BRÜHMASCHINE MIT EINER DERARTIGEN BRÜHKAMMER**
BREWING CHAMBER AND BREWING MACHINE WITH ONE SUCH BREWING CHAMBER
CHAMBRE DE PERCOLATION ET MACHINE À PERCOLATION ÉQUIPÉE D'UNE TELLE CHAMBRE

(30) Priorität: 09.06.2008 EP 08010461
(43) Veröffentlichungstag der Anmeldung: 20.04.2011
(73) Patentinhaber: Tchibo GmbH, 22297 Hamburg (DE)
(72) Erfinder: BALKAU, Werner, 8750 Glarus (CH)
(74) Vertreter: UEXKÜLL & STOLBERG
(86) Internationale Anmeldenummer: PCT/EP2009/004141
(87) Internationale Veröffentlichungsnummer: WO 2009/149897

(56) Entgegenhaltungen:
- EP-A- 1 559 351
- FR-A- 2 132 005

## Beschreibung

Die Erfindung betrifft eine Brühkammer für eine Brühmaschine, die z.B. zum Brühen von Kaffeegetränken eingerichtet ist, sowie eine Brühmaschine mit einer derartigen Brühkammer.

Aus der DE 10 2004 056 224 A1 ist eine Brühmaschine zum Brühen von Kaffeegetränken bekannt. Diese Brühmaschine enthält eine Brühkammer mit einem Unterteil, das zur Aufnahme einer Portionskapsel mit Brühgut eingerichtet ist und einen Auslass für das Brühgetränk aufweist. Als Oberteil der Brühkammer dient eine nach unten freiliegende Anlagefläche der Kaffeemaschine, von der ein Einstichdorn nach unten vorragt. Bei dieser Kaffeemaschine wird das als separate Komponente konzipierte Unterteil der Brühkammer in eine Halteeinrichtung eingesetzt und beim Umlegen eines Hebels an die Anlagefläche herangeführt, so dass das Oberteil in einem geschlossenen Zustand das Unterteil abdeckt. Da das Brühwasser unter Druck in die Portionskapsel eingegeben wird und sich der Druck dabei auf die Brühkammer überträgt, muss die Halteeinrichtung zum druckfesten Verbinden des Unterteils mit dem Oberteil eingerichtet sein. Die EP 1 559 351 A2 zeigt diese Halteeinrichtung und ihren Verriegelungsmechanismus für die Brühkammer im Detail.

Während bei der vorgenannten Kaffeemaschine das Brühgut in einer Portionskapsel bereitgestellt wird, die in die Brühkammer einzusetzen ist, gibt es auch Brühmaschinen, bei denen das Brühgut als gepresstes oder lose befülltes Pad oder Pod zwischen zwei Filterlagen in die Brühkammer eingelegt wird. Ein Beispiel dafür ist in der EP 0 904 717 A1 beschrieben. Bei klassischen Espressomaschinen wird der gemahlene Espressokaffee direkt in die Brühkammer eingefüllt.

In all diesen Fällen wird das Brühwasser unter Druck in die Brühkammer eingegeben. Wenn ausschließlich Filterkaffee verwendet wird, ist der Druck relativ niedrig und beträgt nur wenige bar, aber zum Aufbrühen von Espressokaffee ist die Brühkammer einem Druck in der Größenordnung von 20 bar ausgesetzt.

Die Verbindungseinrichtung, die das Unterteil und das Oberteil der Brühkammer nach dem Einlegen des Brühguts zusammenhält, ist daher beim Betrieb einer Brühmaschine ziemlich großen Kräften ausgesetzt. Dies erfordert eine stabile Konstruktion, die auch verwindungssteif sein muss, damit die zwischen dem Unterteil und dem Oberteil der Brühkammer befindliche Dichtung auch bei hohem Betriebsdruck sicher anliegen kann, z.B. an der Oberseite einer Portionskapsel. Andererseits soll sich die Verbindungseinrichtung schnell öffnen lassen, damit der Benutzer einen bequemen Zugang zu der Brühkammer erhält. Um diese Anforderungen zu erfüllen, haben die vorbekannten Brühkammern eine aufwendig konstruierte Halte- bzw. Verbindungseinrichtung.

Es ist Aufgabe der Erfindung, eine Brühkammer zu schaffen, bei der die Verbindungseinrichtung für eine sichere druckfeste Verbindung zwischen dem Unterteil und dem Oberteil der Brühkammer sorgt, dabei aber einfach zu öffnen ist und im Prinzip von leichter Konstruktion sein kann.

Diese Aufgabe wird gelöst durch eine Brühkammer mit den Merkmalen des Anspruchs 1. Der Anspruch 16 betrifft eine Brühmaschine mit einer derartigen Brühkammer. Vorteilhafte Ausgestaltungen der Erfindung ergeben sich aus den Unteransprüchen.

Die erfindungsgemäße Brühkammer für eine Brühmaschine enthält ein Unterteil, das zur Aufnahme von Brühgut eingerichtet ist und einen Auslass für Brühgetränk aufweist, ein Oberteil, das einen Einlass für Brühwasser aufweist und in einem Schließzustand das Unterteil abdeckt, sowie eine Verbindungseinrichtung, die zum druckfesten Verbinden des Unterteils mit dem Oberteil im Schließzustand eingerichtet ist. Das Brühgut kann z.B. in einer Portionskapsel oder einem Filterpad bereitgestellt werden, lässt sich grundsätzlich aber auch direkt in das Unterteil eingeben (wobei in letzterem Fall vorzugsweise zusätzliche Filterelemente im oder am Unterteil angeordnet sind oder angeordnet werden).

Erfindungsgemäß weist die Verbindungseinrichtung eine Anzahl von Verbindungselementen auf, die jeweils an einer Führung für eine in Bezug auf eine Längsachse der Brühkammer allgemein radiale Bewegung geführt sind. Die Verbindungselemente ragen im Schließzustand der Brühkammer in eine Vertiefung an einem Gegenstück hinein und sind dabei von einer Sperre am Ausweichen nach außen gehindert.

Mit Hilfe einer größeren Anzahl von Verbindungselementen, die über den Umfang der Brühkammer verteilt sind, lässt sich eine sehr sichere druckfeste Verbindung zwischen dem Unterteil und dem Oberteil der Brühkammer erzielen, wobei es auch beim Druckaufbau nicht zu unerwünschten Verwindungen kommt. Dies ist mit einem Flansch mit vielen Schrauben vergleichbar, aber im Gegensatz zu dem Flansch lässt sich die Verbindungseinrichtung der Brühkammer ganz schnell lösen, damit der Innenraum der Brühkammer zugänglich wird.

Grundsätzlich kann auch eine geringere Zahl von Verbindungselementen verwendet werden, aber dann ist in der Regel eine stärkere Konstruktion erforderlich, um die notwendige Verwindungsfestigkeit der Brühkammer im Schließzustand zu erreichen.

Bei vorteilhaften Ausführungsformen der Erfindung sind die Verbindungselemente als Körper (Kugeln) gestaltet, die jeweils in einer Führung bzw. Kugelführung für eine in Bezug auf die Längsachse der Brühkammer allgemein radiale Bewegung geführt sind.

Unter dem Begriff "Kugel" werden hier nicht nur Kugeln in geometrisch strengem Sinne verstanden, sondern auch andere Körper, die in einer Führung für eine in Bezug auf die Längsachse der Brühkammer allgemein radiale Bewegung geführt sind und im Schließzustand der Brühkammer in eine Vertiefung an einem Gegenstück hineinragen und beim Öffnen der Brühkammer nach außen ausweichen und dabei aus der Vertiefung austreten können.

Bei vorteilhaften Ausführungsformen der Erfindung ist die Sperre allgemein in Richtung der Längsachse von einer Schließposition im Schließzustand der Brühkammer in eine Öffnungsposition bewegbar. In der Öffnungsposition gestattet die Sperre ein Ausweichen des jeweiligen Verbindungselements nach außen. Die Sperre ist hierbei als gemeinsame Sperre für alle Verbindungselemente konstruiert, so dass sich durch eine Bewegung der Sperre in die Öffnungsposition die Verbindungseinrichtung in bedienungsfreundlicher Weise öffnen lässt.

Vorzugsweise weist das Unterteil der Brühkammer eine Seitenwand auf, an deren Außenseite die Vertiefungen angeordnet sind. Bei einer bevorzugten Ausführungsform sind dabei die Vertiefungen als für alle Verbindungselemente gemeinsame umlaufende Rille in der Seitenwand des Unterteils ausgestaltet.

Wenn die Verbindungselemente als Körper (Kugeln) gestaltet sind, können die Führungen als Durchgangsöffnungen in einem Halter ausgebildet sein, der eine Komponente des Oberteils darstellt und im Schließzustand der Brühkammer die Seitenwand des Unterteils zumindest teilweise überdeckt. Bei dieser Konstruktion ist die Verbindungseinrichtung also teilweise am Oberteil (Halter mit Körpern bzw. Kugeln) und teilweise am Unterteil (Vertiefungen an der Seitenwand des Unterteils) angeordnet. Dabei kann auch die Sperre eine Komponente des Oberteils sein, so dass die Verbindungseinrichtung keine von dem Unterteil und dem Oberteil separaten Teile aufweist. Bei anderen Ausgestaltungen ist es auch denkbar, dass die Körper bzw. Kugeln der Verbindungseinrichtung am Unterteil und die Vertiefungen, in die die Körper bzw. Kugeln im Schließzustand hineinragen, am Oberteil der Brühkammer vorgesehen sind.

Die Durchgangsöffnungen in dem zuvor erwähnten Halter sind vorzugsweise radial nach innen zu verengt, um ein Herausfallen der Körper bzw. Kugeln nach innen zu verhindern. Diese Verengung ist so gering, dass die Körper bzw. Kugeln im Schließzustand trotzdem nach innen in die Vertiefungen bzw. die Rille in der Seitenwand des Unterteils vorragen. Ohne die Verengungen oder eine anders gestaltete Rückhalteeinrichtung für die Körper bzw. Kugeln würden die Körper bzw. Kugeln aus den Führungen herausfallen, wenn sie im geöffneten Zustand der Brühkammer nicht von den Vertiefungen an der Seitenwand des Unterteils daran gehindert werden.

Bei einer vorteilhaften Ausführungsform stellt die Sperre eine Komponente des Oberteils dar und ist als umlaufender Ring ausgestaltet, der relativ zu dem Halter verschiebbar ist, in der Schließposition die Außenseiten der Durchgangsöffnungen abdeckt und in der Öffnungsposition ein radiales Ausweichen der Körper bzw. Kugeln in einen Zwischenraum gestattet. Mit einer derartigen Sperre lässt sich durch eine einfache Bewegung in Richtung der Längsachse der Brühkammer die Brühkammer im Schließzustand verriegeln, indem die Körper bzw. Kugeln am Ausweichen aus den Vertiefungen gehindert werden, oder zum Öffnen entriegeln, indem den Körpern bzw. Kugeln ein Ausweichen aus den Vertiefungen gestattet wird. Im letzteren Fall treten z.B. Kugeln wegen ihrer gekrümmten Oberfläche bereits bei einer geringen in Richtung der Längsachse wirkenden Kraft aus den Vertiefungen aus, so dass die Verbindung zwischen dem Unterteil und dem Oberteil der Brühkammer gelöst ist.

Die Sperre kann in Bezug auf den Halter durch Federwirkung auf die Öffnungsposition zu vorgespannt sein. In diesem Fall sind das Unterteil und das Oberteil der Brühkammer fest miteinander verbunden, wenn die Sperre gegen die Federwirkung in Schließposition gedrückt ist. Eine Fixierung dieses Schließzustandes lässt sich bereits mit geringem Kraftaufwand erreichen, der um Größenordnungen kleiner sein kann als die von dem Brühdruck hervorgerufenen Kräfte.

Bei einer weiteren Ausführungsform der Erfindung sind die Verbindungselemente jeweils als Zunge mit einem festen Ende und einem freien Ende gestaltet, wobei die Führung eine Ringstruktur als Halterung für die festen Enden der Zungen aufweist und die freien Enden der Zungen jeweils mit einem radial nach innen weisenden Vorsprung versehen sind, der im Schließzustand in die Vertiefung an dem Gegenstück hineinragt. Wenn sich die Sperre in der Öffnungsposition befindet, können die freien Enden der Zungen radial nach außen ausweichen, so dass die Vorsprünge die Vertiefungen verlassen und die Brühkammer geöffnet werden kann.

Diese Ausführungsform hat den Vorteil, dass alle Verbindungselemente und die Ringstruktur als einstückiges Bauteil gefertigt werden können, was die Montage der Brühkammer vereinfacht.

Zwischen dem Oberteil und dem Unterteil der Brühkammer kann eine druckfeste Dichtung vorgesehen sein, die vorzugsweise am Oberteil oder am Unterteil befestigt ist. Wenn die Brühkammer mit einer in das Unterteil eingesetzten Portionskapsel verwendet wird, ist es vorteilhaft, wenn diese Dichtung an der Oberseite der Portionskapsel anliegt und somit die Oberseite der Portionskapsel gegen das Oberteil der Brühkammer abdichtet.

Bei einer vorteilhaften Ausführungsform weist das Oberteil einen zentralen Deckelbereich auf, von dem mindestens ein Einstichdorn nach unten vorragt. Mit dem Einstichdorn lässt sich der Deckel einer in das Unterteil der Brühkammer eingesetzten Portionskapsel perforieren, wenn das Unterteil und das Oberteil relativ zueinander in den Schließzustand bewegt werden. Der Einstichdorn kann hohl sein, um das Brühwasser über den Einstichdorn in die Brühkammer einzulassen. Falls unabhängig von dem Einstichdorn ein Einlass für das Brühwasser vorgesehen ist, lässt sich auch ein massiver Einstichdorn verwenden. Falls die Brühkammer nicht mit einer im Lieferzustand allseitig geschlossenen Portionskapsel verwendet werden soll, sondern z.B. mit einem oder mehreren Kaffeepads oder mit losem Mahlkaffee, braucht die Brühkammer an ihrem Oberteil kein Perforationsmittel vorzusehen; statt dessen kann dort z.B. ein Lochblech zur gleichmäßigen Verteilung des unter Druck einströmenden Brühwassers angebracht sein.

Das Unterteil kann einen Bodenbereich aufweisen, von dem mindestens ein Einstichdorn nach oben vorragt, der vorzugsweise von einer Feder umgeben ist. Eine derartige Ausführungsform ist wiederum besonders für die Verwendung mit Portionskapseln gedacht, wobei der Einstichdorn z.B. beim Einsetzen der Portionskapsel in das Unterteil der Brühkammer den Boden der Portionskapsel durchstößt, um bei dem anschließenden Brühvorgang das Brühgetränk abzuleiten. (Bei der Verwendung von Pads oder Mahlkaffee können anstelle eines Dornes ein geeignetes Filtrationsmittel, z.B. ein einfaches Lochblech, zum Zurückhalten des Extraktionsgutes sowie eine Getränkeableiteinrichtung vorgesehen sein.) Der Einstichdorn am Unterteil ist vorzugsweise von einer Feder umgeben, z.B. einer Schraubenfeder, die etwas länger ist als der Einstichdorn. Diese Feder verhindert einerseits, dass der Benutzer versehentlich mit dem Einstichdorn in Berührung kommt, und drückt andererseits die Portionskapsel nach oben, wenn sich die Brühkammer nicht im Schließzustand befindet, so dass sich die Portionskapsel nach Beendigung des Brühvorgangs leichter entnehmen lässt.

Die erfindungsgemäße Brühkammer kann als eigenständige Komponente einer Brühmaschine konzipiert sein und lässt sich grundsätzlich in ganz verschiedene Arten von Brühmaschinen einbauen. Um dies zu erleichtern, weist das Oberteil vorzugsweise in seinem Außenbereich eine Kupplung auf, an die eine Leitung für die Zufuhr von Brühwasser angeschlossen werden kann.

Eine Brühmaschine, die eine erfindungsgemäße Brühkammer enthält, weist außerdem eine Heißwassereinrichtung zum Zubereiten von Brühwasser und zum Zuführen des Brühwassers zu dem Einlass der Brühkammer auf. Der grundsätzliche Aufbau einer derartigen Brühmaschine, z.B. mit einem Gehäuse, einem Wassertank, einem Boiler, einer Wasserpumpe, Leitungen und einer Steuerung, ist allgemein bekannt.

Bei einem Beispiel für eine solche Brühmaschine weist das Gehäuse der Brühmaschine einen Deckel auf, der von einem Betriebszustand in einen Öffnungszustand bewegbar ist. Im Öffnungszustand ist das Oberteil der Brühkammer von dem Unterteil der Brühkammer abgehoben und das Unterteil der Brühkammer zugänglich, so dass z.B. eine Portionskapsel, ein Kaffeepad, ein Kaffepod oder Mahlkaffee eingebracht werden kann. Der Deckel ist mit der Sperre gekoppelt und bewegt beim Übergang vom Betriebszustand in den Öffnungszustand die Sperre in die Öffnungsposition. Bei einer derartigen Ausgestaltung bemerkt der Benutzer gar nicht, dass er beim Öffnen des Deckels der Brühmaschine gleichzeitig die Verbindungseinrichtung der Brühkammer löst. Denn die erfindungsgemäß konstruierte Verbindungseinrichtung lässt sich ohne großen Kraftaufwand bedienen, obwohl sie selbst einem hohen Brühdruck standhalten kann.

Eine Rasteinrichtung, mit der der Deckel der Brühmaschine im Betriebszustand verrastet wird, kann vorteilhaft sein, insbesondere, wenn die Sperre der Verbindungseinrichtung in Öffnungsposition vorgespannt ist. In diesem Fall braucht die Rasteinrichtung jedoch lediglich kräftiger zu sein als die Vorspannung, muss also bei weitem nicht dem Brühdruck standhalten.

Im Folgenden wird die Erfindung anhand eines Ausführungsbeispiels weiter erläutert. Die Zeichnungen zeigen in
- Figur 1: eine Explosionsansicht einer Ausführungsform der erfindungsgemäßen Brühkammer, bei der im Ausführungsbeispiel die Verbindungselemente kugelförmige Körper sind,
- Figur 2: eine Seitenansicht der Brühkammer gemäß Figur 1 im geschlossenen Zustand,
- Figur 3: einen Längsschnitt durch die Brühkammer gemäß Figur 1 im geschlossenen Zustand in einer Ebene, die durch die in Figur 1 angezeigte Längsachse verläuft,
- Figur 4: in Teil (a) einen Längsschnitt durch die Brühkammer ähnlich wie Figur 3 und in Teil (b) eine Detailvergrößerung, die die Wirkungsweise einer Verbindungseinrichtung im geschlossenen Zustand verdeutlicht,
- Figur 5: in Teil (a) einen Längsschnitt wie in Figur 4(a) während des Öffnens der Brühkammer und in Teil (b) eine Detailvergrößerung, die verdeutlicht, wie die Verbin- dungseinrichtung die Verbindung zwischen Unterteil und Oberteil freigibt,
- Figur 6: einen Längsschnitt wie in Figur 5(a), wobei das Oberteil der Brühkammer, das teilweise in Seitenansicht dargestellt ist, von dem Unterteil abgehoben ist,
- Figur 7: einen schematischen Längsschnitt durch eine Brühmaschine, in die die Brühkammer gemäß den Figuren 1 bis 6 eingebaut ist,
- Figur 8: eine Explosionsansicht einer weiteren Ausführungsform der erfindungsgemäßen Brühkammer, bei der die Verbindungselemente als Zungen gestaltet sind,
- Figur 9: in Teil (a) einen Längsschnitt durch die Brühkammer gemäß Figur 8 und in Teil (b) eine Detailvergrößerung, die verdeutlicht, wie die Verbindungseinrichtung die Verbindung zwischen Unterteil und Oberteil freigibt, und
- Figur: 10 eine Detailvergrößerung aus einem Längsschnitt durch die Brühkammer gemäß Figur 8, die die Wirkungsweise der Verbindungseinrichtung im Schließzustand verdeutlicht.

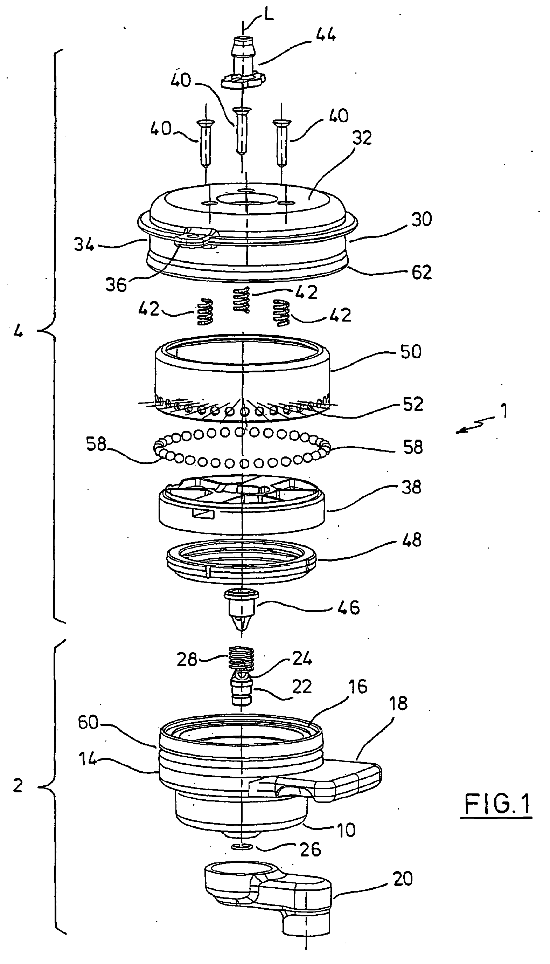

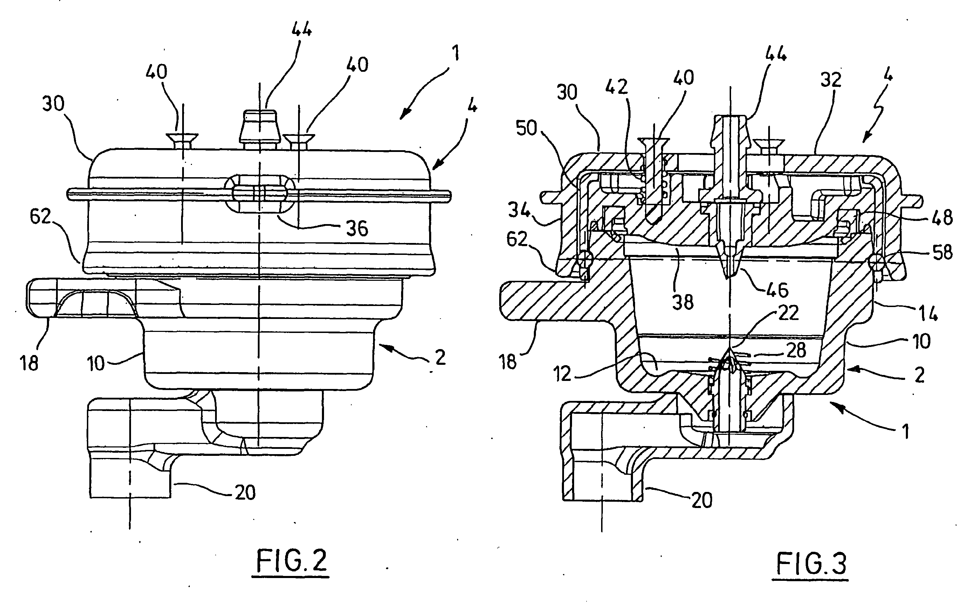

In Figur 1 ist eine Ausführungsform einer Brühkammer 1 in Explosionsansicht veranschaulicht. Die Figuren 2 und 3 zeigen die Brühkammer 1 in zusammengebautem Zustand, und zwar die Figur 2 in Seitenansicht und die Figur 3 im Längsschnitt.

Die Brühkammer 1 weist ein Unterteil 2 und ein Oberteil 4 auf. In Figur 1 ist dargestellt, welche Einzelteile im Ausführungsbeispiel dem Unterteil 2 und dem Oberteil 4 zugeordnet sind.

Mit Hilfe einer Verbindungseinrichtung können das Unterteil 2 und das Oberteil 4 druckfest miteinander verbunden werden. Im Ausführungsbeispiel ist die Verbindungseinrichtung keine selbstständige Komponente der Brühkammer 1, sondern die einzelnen Bauteile der Verbindungseinrichtung sind im Wesentlichen dem Oberteil 4 zugeordnet. In den Figuren 2 und 3 befindet sich die Brühkammer 1 im geschlossenen Zustand (Schließzustand), in dem die Verbindungseinrichtung für eine druckfeste Verbindung sorgt.

Das Unterteil 2 enthält ein als Schale 10 gestaltetes Bauteil mit einem Bodenbereich 12 und einer Seitenwand 14. Am oberen Rand der Seitenwand 14 ist eine Dichtfläche 16 vorgesehen. Von der Seitenwand 14 springt ein Halteelement 18 vor.

Unter dem Bodenbereich 12 der Schale 10 ist ein Auslass 20 angebracht, über den ein Brühgetränk aus der Schale 10 abgeleitet werden kann.

Im Ausführungsbeispiel ist die Brühkammer 1 zur Verwendung mit einer Portionskapsel konzipiert, die Brühgut (z.B. Mahlkaffee) enthält. Daher ragt durch eine Öffnung im Bodenbereich 12 ein hohler Einstichdorn 22, der im Bereich seiner Spitze mit Öffnungen 24 versehen ist. Der Einstichdorn 22 ist mit einem Sprengring 26 befestigt. Der Bereich der Spitze des Einstichdorns 22 ist von einer Schraubenfeder 28 umgeben, die einerseits verhindern soll, dass ein Benutzer unbeabsichtigt mit dem Einstichdorn 22 in Kontakt kommt, und die andererseits eine in das Unterteil 2 eingesetzte Portionskapsel etwas nach oben drückt, so dass sie sich später leicht aus dem Unterteil 2 entfernen lässt.

Das Oberteil 4 weist ein als Verschlussglocke 30 bezeichnetes Bauteil auf, das einstückig einen Deckelbereich 32, eine umlaufende Seitenwand 34 und zwei Befestigungsansätze 36 enthält.

Ein weiteres Bauteil des Oberteils 4 ist ein Zentralteil 38, das so an der Verschlussglocke 30 befestigt ist, dass es sich etwas in Richtung der in Figur 1 eingezeichneten Längsachse L verschieben lässt. Zur Befestigung dienen drei Schraubstifte 40, die durch Öffnungen im Deckelbereich 32 der Verschlussglocke 30 geführt und in das Zentralteil 38 eingeschraubt sind. Die Schäfte der Schraubstifte 40 sind jeweils von einer Schraubenfeder 42 umgeben, die in dem in Figur 3 dargestellten Schließzustand der Brühkammer 1 zusammengedrückt ist.

Durch eine relativ große Öffnung im Deckelbereich 32 der Verschlussglocke 30 ragt ein Einlass 44, der fest und in abgedichteter Weise mit einem hohlen Einstichdorn 46 verbunden ist, der in einer zentralen Öffnung in dem Zentralteil 38 befestigt ist. Der Einstichdorn 46 weist im Bereich seiner Spitze Öffnungen auf und dient zum Perforieren des Deckels einer in die Brühkammer 1 eingesetzten Portionskapsel. Über den Einlass 44 und den Einstichdorn 46 kann Brühwasser ins Innere der Portionskapsel geleitet werden.

In dem Zentralteil 38 ist eine umlaufende Nut vorgesehen, siehe Figur 3, in die eine Dichtung 48 eingesetzt ist. Im Schließzustand der Brühkammer 1 dichtet die Dichtung 48 das Oberteil 4 gegen die Dichtfläche 16 des Unterteils 2 (oder gegen die Oberseite einer in das Unterteil 2 eingesetzten Portionskapsel) ab.

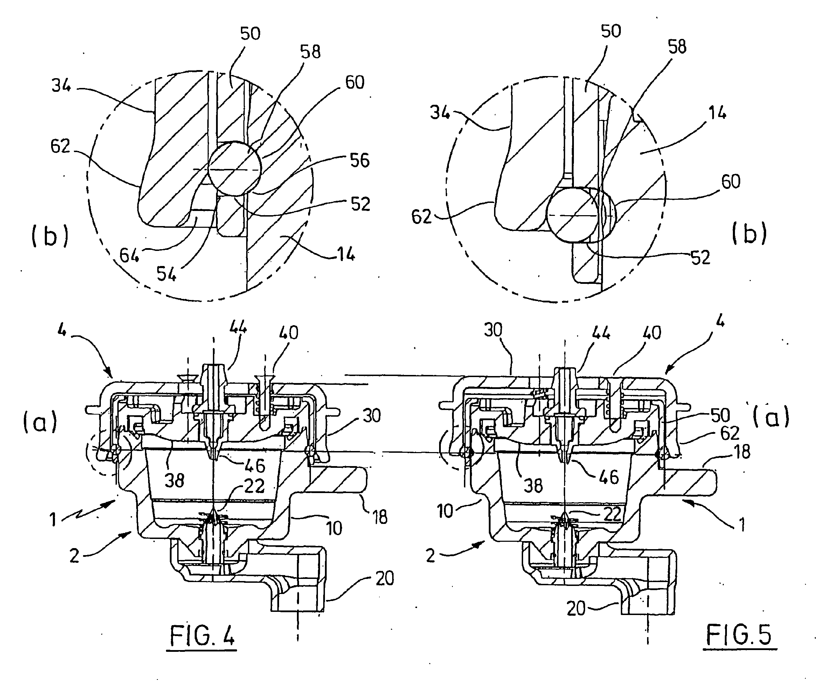

Die Verbindungseinrichtung weist einen Kugelhalter 50 auf, der als ringförmiges Teil gestaltet ist und das Zentralteil 38 umgibt und fest damit verbunden ist. In der Nähe seines unteren Randes ist über den gesamten Umfang des Kugelhalters 50 verteilt eine Anzahl von Durchgangsöffnungen 52 angeordnet. Die Durchgangsöffnungen 52 erstrecken sich über die volle Materialstärke des Kugelhalters 50 und sind jeweils leicht konisch geformt, so dass sie an ihrer Außenseite 54 einen etwas größeren Durchmesser besitzen als an ihrer Innenseite 56, siehe Figur 4(b). Die Durchgangsöffnungen 52 dienen als Kugelführungen, und zwar jeweils für eine Kugel 58. Wie in den Figuren 4(b) und 5(b) erkennbar, kann sich eine Kugel 58 innerhalb einer Durchgangsöffnung 52 bewegen, und zwar, bezogen auf die Längsachse L, radial nach innen so weit, dass sie in Bezug auf den Kugelhalter 50 nach innen vorragt, aber von dem relativ kleinen Durchmesser an der Innenseite 56 der Durchgangsöffnung 52 am Herausfallen gehindert wird. Radial nach außen kann die Kugel 58 im Prinzip die Durchgangsöffnung 52 verlassen, wird daran aber bei zusammengebauter Brühkammer 1 von der Seitenwand 34 der Verschlussglocke 30 gehindert.

In Figur 4(a) ist die Brühkammer 1 im geschlossenen Zustand dargestellt, wobei das Unterteil 2 und das Oberteil 4 mittels der Verbindungseinrichtung druckfest miteinander verbunden sind. In diesem Zustand ist die Verschlussglocke 30 in Bezug auf das Zentralteil 38 gegen die Wirkung der Schraubenfedern 42 nach unten gedrückt, so dass die Kugeln 58 radial nach innen vorragen und durch die Innenseite der Seitenwand 34 daran gehindert werden, sich radial nach außen zu verlagern. In diesem Zustand greifen die Kugeln 58 in eine umlaufende Rille 60 ein, die an der Seitenwand 14 des Unterteils 2 angeordnet ist, siehe Figur 3, Figur 4(a) und Figur 4(b). Der untere Bereich der Seitenwand 34 der Verschlussglocke 30 ist hier als Sperre 62 bezeichnet.

Wenn nun unter der Wirkung der Schraubenfedern 42 die Verschlussglocke 30 in Richtung der Längsachse L nach oben verschoben wird, was bis zu dem durch die Schraubstifte 40 gegebenen Anschlag möglich ist, verlässt die Sperre 62 ihre Schließposition und geht in die in Figur 5(a) und Figur 5(b) dargestellte Öffnungsposition über. Die Sperre 62 ist so gestaltet, dass die Kugeln 58 nun in einen Zwischenraum 64 eintreten können, wobei sie nicht mehr in die Rille 60 hineinragen. Die Sperre 62 hindert die Kugeln 58 aber nach wie vor daran, aus den Durchgangsöffnungen 52 herauszufallen. Da die Kugeln 58 in den Durchgangsöffnungen 52 im Prinzip frei beweglich sind und wegen der Querschnittsform der Rille 60, nehmen die Kugeln 58 spätestens dann die in Figur 5(b) gezeigte Position ein, wenn die Verschlussglocke 30 in Bezug auf den Kugelhalter 50 ganz nach oben verschoben ist, wie in Figur 5(a) dargestellt, und bei einer weiteren nach oben gerichteten Kraftausübung den Kugelhalter 50 mitnimmt. Dafür sind keine großen Kräfte erforderlich.

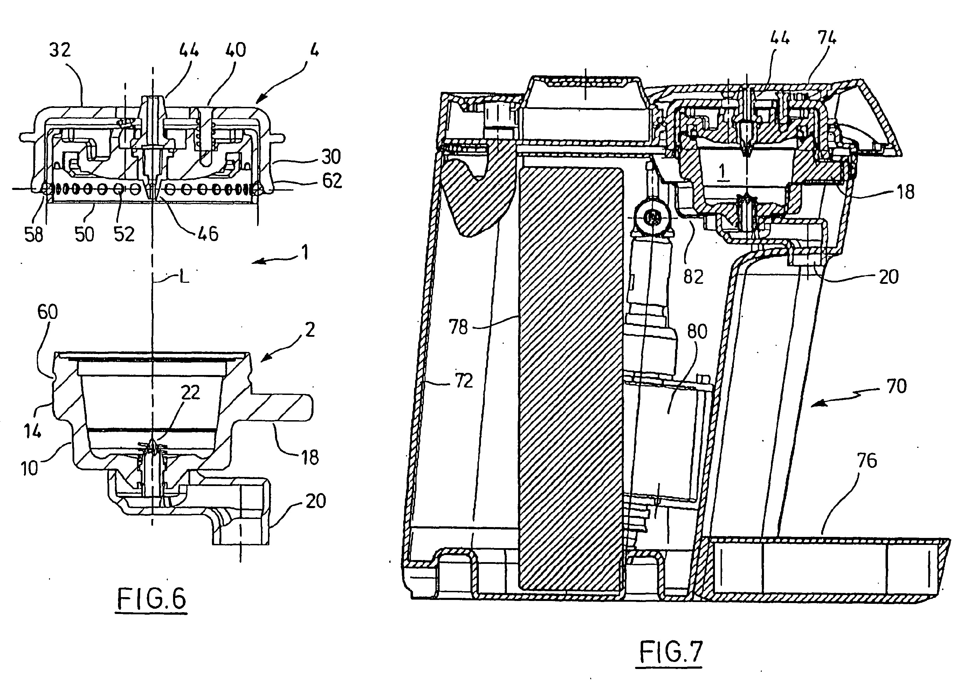

Die Verbindungseinrichtung ist nun vollständig entriegelt, so dass das Oberteil 4 von dem Unterteil 2 getrennt werden kann (geöffneter Zustand der Brühkammer 1), siehe Figur 6.

Im Ausführungsbeispiel ist eine große Zahl von Kugeln 58 vorgesehen, die im Schließzustand der Brühkammer 1, gleichmäßig verteilt über den Umfang der Seitenwand 14, in die Rille 60 eingreifen. Das Unterteil 2 und das Oberteil 4 sind daher sehr sicher und fest miteinander verbunden, was auch einem hohen Brühdruck standhält. Wegen der gleichmäßigen Verteilung der Kugeln 58 treten nur geringe Durchbiegungen auf, so dass die Wirkung der Dichtung 48 gewährleistet ist.

In Figur 7 ist in schematischer Ansicht eine Brühmaschine 70 dargestellt, in die die Brühkammer 1 eingebaut ist. Die Brühmaschine 70 besitzt ein Gehäuse 72 mit einem Deckel 74. Unterhalb der Brühkammer 1 ist ein Stellbereich 76 vorgesehen, auf dem ein Auffangbehälter (z.B. eine Tasse) für das Brühgetränk abgestellt werden kann.

Im Inneren der Brühmaschine 70 sind ein Boiler 78 für die Erwärmung des Brühwassers und eine Pumpe 80 für die Förderung des Brühwassers und zur Druckerzeugung zu erkennen. Weitere Komponenten, wie ein Vorratsbehälter für das noch nicht erwärmte Brühwasser, eine Maschinensteuerung und Leitungen, sind nicht dargestellt. Das Funktionsprinzip der Brühmaschine 70 ist dem Fachmann bekannt und braucht daher nicht näher erläutert zu werden.

Wie in Figur 7 ersichtlich, ruht das Unterteil 2 der Brühkammer 1 in der Brühmaschine 70 auf einer Halterung 82. Das Halteelement 18 ragt dabei in eine Aussparung der Halterung 82, um das Unterteil 2 zu arretieren. Das Oberteil 4 der Brühkammer 1 ist mit Hilfe der Befestigungsansätze 36 an der Innenseite des Deckels 74 angebracht. Der Deckel 74 ist in der Darstellung nach Figur 7 an seiner linken Seite am Gehäuse 72 angelenkt und lässt sich im Gegenzeigersinn nach oben wegklappen. Wenn der Deckel 74 geschlossen ist, drückt er die Verschlussglocke 30 mit der Sperre 62 gegen die Wirkung der Schraubenfedern 42 nach unten, so dass sich die Brühkammer 1 im Schließzustand befindet und sicher und druckfest verriegelt ist. Der Deckel 74 ist in diesem Zustand durch eine Raste arretiert, die in Figur 7 nicht eingezeichnet ist.

Wird der Deckel 74 geöffnet, wozu nur geringe Kräfte erforderlich sind, öffnet sich die Brühkammer 1 in der anhand der Figuren 5 und 6 erläuterten Weise. Das Unterteil 2 der Brühkammer 1 ist nun frei zugänglich, so dass man z.B. eine Portionskapsel in das Unterteil 2 einsetzen kann. Wenn danach der Dekkel 74 geschlossen wird, geht die Brühkammer 1 in den Schließzustand über. Gleichzeitig perforieren der Einstichdorn 22 die Unterseite und der Einstichdorn 46 die Oberseite der Portionskapsel. Wenn die Brühmaschine 70 in Betrieb genommen wird, fördert die Pumpe 80 Wasser in den Boiler 78, das als erwärmtes Brühwasser über eine in Figur 7 nicht eingezeichnete Leitung zu dem Einlass 44 strömt und durch den Einstichdorn 46 in das Innere der Portionskapsel gelangt. Das fertige Brühgetränk fließt durch den Einstichdorn 22 und den Auslass 20 in das Gefäß im Stellbereich 76.

Nach Beendigung des Brühvorgangs kann der Benutzer den Deckel 74 öffnen, so dass das Unterteil 2 der Brühkammer 1 frei zugänglich wird, wie bereits erläutert. Falls erforderlich, z.B. für Reinigungszwecke, kann der Benutzer das Unterteil 2 auf der Halterung 82 in der Darstellung gemäß Figur 7 nach links verschieben, so dass das Halteelement 18 von der Halterung 82 freigegeben wird und sich das Unterteil 2 ganz aus der Brühmaschine 70 entnehmen lässt.

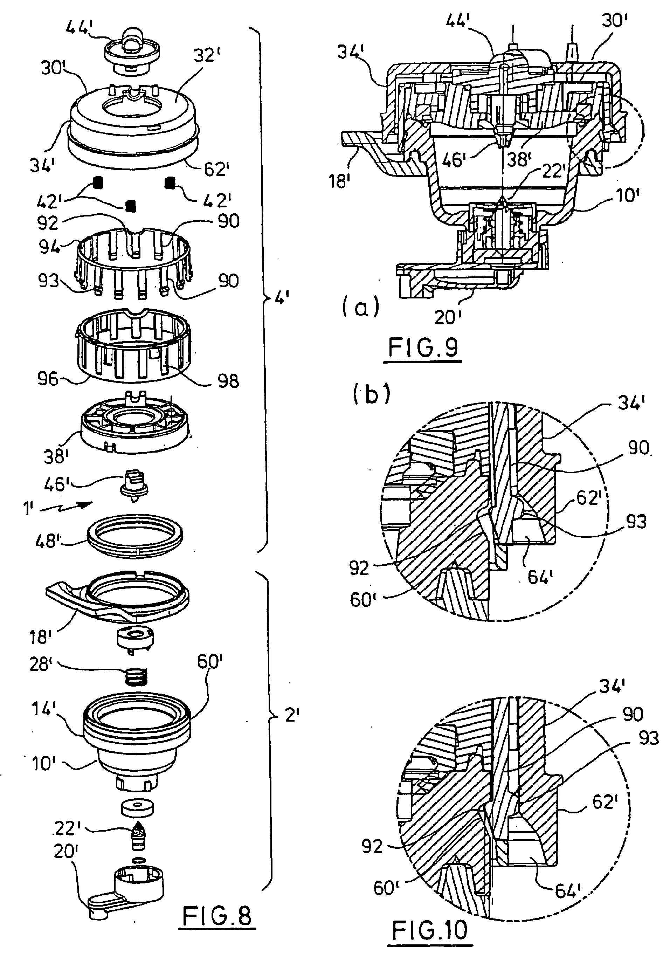

Die Figuren 8 bis 10 veranschaulichen eine weitere Ausführungsform einer Brühkammer, die hier mit 1' bezeichnet ist. Die Brühkammern 1 und 1' unterscheiden sich im wesentlichen nur in der Ausgestaltung der Verbindungseinrichtung. Daher sind für einander entsprechende baugleiche oder ähnliche Teile bei der zweiten Ausführungsform die gleichen Bezugszeichen benutzt wie für die erste Ausführungsform, der Deutlichkeit halber aber mit einem Strich gekennzeichnet.

Die Explosionsansicht gemäß Figur 8 zeigt die Einzelteile des Unterteils 2' und des Oberteils 4' der Brühkammer 1'. Das Unterteil 2' weist eine Schale 10' mit einer Seitenwand 14' mit einer umlaufenden Rille 60', einen Griff 18', einen Auslass 20' und einen von einer Feder 28' umgebenen Einstichdorn 22' auf. Das Oberteil 4' enthält eine Verschlussglocke 30' mit einem Deckelbereich 32' und einer Seitenwand 34', ein Zentralteil 38', einen Einlass 44', einen Einstichdorn 46' und eine Dichtung 48'.

In der Darstellung gemäß Figur 9(a) ist die Brühkammer 1' zusammengebaut, aber nicht verriegelt. Drei in Figur 8 erkennbare Schraubenfedern 42' drücken dabei die Verschlussglocke 30' in Bezug auf das Zentralteil 38' nach oben. Der obere Anschlag wird bei dieser Ausführungsform nicht durch drei den Schraubstiften 40 vergleichbare Schraubstifte gebildet, sondern durch drei Rasten, die beim Zusammenbau der Brühkammer 1' ausweichen können (in den Figuren nicht eingezeichnet).

Die Figuren 9(b) und 10 veranschaulichen die Wirkungsweise der Verbindungseinrichtung dieser Ausführungsform. Die Verbindungseinrichtung weist als Verbindungselemente eine Anzahl von parallel zueinander ausgerichteten und ringförmig angeordneten Zungen 90 auf, siehe auch Figur 8, die jeweils ein freies Ende und ein festes Ende haben. Die freien Enden tragen jeweils einen radial nach innen weisenden Vorsprung 92 und einen gegenüberliegenden Außenvorsprung 93. Die festen Enden sind an einer Ringstruktur 94 befestigt. Diese Anordnung ist in eine Halterung 96 eingesetzt, in der sich die Zungen 90 in Schlitzen 98 bewegen können und die eine zusätzliche Stabilität verleiht.

In dem Zustand gemäß Figur 9(b) (Öffnungsposition) liegt die durch den unteren Randbereich der Verschlussglocke 30' gebildete Sperre 62' nicht an den Außenvorsprüngen 93 der Zungen 90 an, so dass deren freie Enden radial nach außen in den Zwischenraum 64' ausweichen können und sich die Brühkammer 1' öffnen lässt.

Wenn dagegen die Verschlussglocke 30' nach unten verschoben ist (wie anhand der ersten Ausführungsform und auch der Figur 7 erläutert), befindet sich die Brühkammer 1' in dem in Figur 10 gezeigten Schließzustand. Dann liegen die Außenvorsprünge 93 der Zungen 90 an der Sperre 62' an und die Vorsprünge 92 sitzen sicher in der Rille 60', so dass die Brühkammer 1' druckfest verriegelt ist.

## Patentansprüche

1. Brühkammer für eine Brühmaschine, mit
- einem Unterteil (2; 2'), das zur Aufnahme von Brühgut eingerichtet ist und einen Auslass (20; 20') für Brühgetränk aufweist,
- einem Oberteil (4; 4'), das einen Einlass (44; 44') für Brühwasser aufweist und in einem Schließzustand das Unterteil (2; 2') abdeckt, und
- einer Verbindungseinrichtung (50, 58, 60, 62; 94, 96, 90, 60', 62'), die zum druckfesten Verbinden des Unterteils (2; 2') mit dem Oberteil (4; 4') im Schließzustand eingerichtet ist,
**dadurch gekennzeichnet, dass** die Verbindungseinrichtung eine Anzahl von Verbindungselementen (58; 90) aufweist, die jeweils an einer Führung (50, 52; 94, 96)) für eine in Bezug auf eine Längsachse (L) der Brühkammer (1) allgemein radiale Bewegung geführt sind und im Schließzustand in eine Vertiefung (60; 60') an einem Gegenstück (14; 14') hineinragen und dabei am Ausweichen nach außen von einer Sperre (62; 62') gehindert sind.

2. Brühkammer nach Anspruch 1, **dadurch gekennzeichnet, dass** die Sperre (62; 62') allgemein in Richtung der Längsachse (L) von einer Schließposition im Schließzustand der Brühkammer (1; 1') in eine Öffnungsposition bewegbar ist und in der Öffnungsposition ein Ausweichen des jeweiligen Verbindungselements (58; 90) nach außen gestattet.

3. Brühkammer nach Anspruch 1 oder 2, **dadurch gekennzeichnet, dass** das Unterteil (2; 2') eine Seitenwand (14; 14') aufweist, an deren Außenseite die Vertiefungen (60; 60') angeordnet sind.

4. Brühkammer nach Anspruch 3, **dadurch gekennzeichnet, dass** die Vertiefungen als für alle Verbindungselemente (58; 90) gemeinsame umlaufende Rille (60; 60') in der Seitenwand (14; 14') des Unterteils (2; 2') ausgestaltet sind.

5. Brühkammer nach einem der Ansprüche 1 bis 4, **dadurch gekennzeichnet, dass** die Verbindungselemente als Körper (58) gestaltet sind, die jeweils in einer Führung (50, 52) für eine in Bezug auf die Längsachse (L) der Brühkammer (1) allgemein radiale Bewegung geführt sind.

6. Brühkammer nach Anspruch 5 in Verbindung mit Anspruch 3 oder 4, **dadurch gekennzeichnet, dass** die Führungen als Durchgangsöffnungen (52) in einem Halter (50) ausgestaltet sind, der eine Komponente des Oberteils (4) darstellt und im Schließzustand der Brühkammer (1) die Seitenwand (14) des Unterteils (2) zumindest teilweise überdeckt.

7. Brühkammer nach Anspruch 6, **dadurch gekennzeichnet, dass** die Durchgangsöffnungen (52) radial nach innen (56) zu verengt sind, um ein Herausfallen der Körper (58) nach innen zu verhindern.

8. Brühkammer nach Anspruch 6 oder 7 in Verbindung mit Anspruch 2, **dadurch gekennzeichnet, dass** die Sperre (62) eine Komponente des Oberteils (4) darstellt und als umlaufender Ring (34, 62) ausgestaltet ist, der relativ zu dem Halter (50) verschiebbar ist, in der Schließposition die Außenseiten (54) der Durchgangsöffnungen (52) abdeckt und in der Öffnungsposition ein radiales Ausweichen der Körper (58) in einen Zwischenraum (64) gestattet.

9. Brühkammer nach Anspruch 8, **dadurch gekennzeichnet, dass** die Sperre (62) in Bezug auf den Halter (50) durch Federwirkung (42) auf die Öffnungsposition zu vorgespannt ist.

10. Brühkammer nach einem der Ansprüche 5 bis 9, **dadurch gekennzeichnet, dass** die Körper Kugeln (58) in geometrisch strengem Sinne sind, die jeweils in einer Kugelführung (50, 52) für eine in Bezug auf die Längsachse (L) der Brühkammer (1) allgemein radiale Bewegung geführt sind.

11. Brühkammer nach einem der Ansprüche 1 bis 4, **dadurch gekennzeichnet, dass** die Verbindungselemente jeweils als Zunge (90) mit einem festen Ende und einem freien Ende gestaltet sind, wobei die Führung (94, 96) eine Ringstruktur (94) als Halterung für die festen Enden der Zungen (90) aufweist und die freien Enden der Zungen (90) jeweils mit einem radial nach innen weisenden Vorsprung (92) versehen sind, der im Schließzustand in die Vertiefung (60') an dem Gegenstück (14') hineinragt.

12. Brühkammer nach einem der Ansprüche 1 bis 11, **dadurch gekennzeichnet, dass** zwischen dem Oberteil (4; 4') und dem Unterteil (2; 2') eine druckfeste Dichtung (48; 48') vorgesehen ist.

13. Brühkammer nach einem der Ansprüche 1 bis 12, **dadurch gekennzeichnet, dass** das Oberteil (4; 4') einen zentralen Deckelbereich (38; 38') aufweist, von dem mindestens ein Einstichdorn (46; 46') nach unten vorragt.

14. Brühkammer nach einem der Ansprüche 1 bis 13, **dadurch gekennzeichnet, dass** das Unterteil (2; 2') einen Bodenbereich (12) aufweist, von dem mindestens ein Einstichdorn (22; 22') nach oben vorragt, der vorzugsweise von einer Feder (28; 28') umgeben ist.

15. Brühkammer nach einem der Ansprüche 1 bis 14, **dadurch gekennzeichnet, dass** die Brühkammer (1; 1') zur Verwendung mit einer das Brühgut enthaltenden Portionskapsel eingerichtet ist.

16. Brühmaschine, mit einer Brühkammer (1; 1') nach einem der Ansprüche 1 bis 15 und mit einer Heißwassereinrichtung (78, 80) zum Zubereiten von Brühwasser und Zuführen des Brühwassers zu dem Einlass (44; 44') der Brühkammer (1; 1').

17. Brühmaschine nach Anspruch 16 in Verbindung mit Anspruch 2, **dadurch gekennzeichnet, dass** die Brühmaschine (70) einen Deckel (74) aufweist, der von einem Betriebszustand in einen Öffnungszustand bewegbar ist, in dem das Oberteil (4; 4') der Brühkammer (1; 1') von dem Unterteil (2; 2') der Brühkammer (1; 1') abgehoben und das Unterteil (2; 2') der Brühkammer (1; 1') zugänglich ist, wobei der Deckel (74) mit der Sperre (62; 62') gekoppelt ist und bei der Bewegung vom Betriebszustand in den Öffnungszustand die Sperre (62; 62') in die Öffnungsposition bewegt.

18. Brühmaschine nach Anspruch 17, **gekennzeichnet durch** eine Rasteinrichtung, die dazu eingerichtet ist, den Deckel (74) im Betriebszustand zu verrasten.

## Claims

1. A brewing chamber for a brewing machine, with
- a lower part (2; 2'), which is designed for the reception of brewing stock and has an outlet (20; 20') for brewed drinks,
- an upper part (4; 4'), which has an inlet (44; 44') for brewing water and covers the lower part (2; 2') in a closed state, and
- a connecting device (50, 58, 60, 62; 94, 96, 90, 60', 62'), which is designed for the pressure-resistant connection of the lower part (2; 2') to the upper part (4; 4') in the closed state,
**characterized in that** the connecting device has a number of connecting elements (58; 90) which are guided in each case on a guide (50, 52; 94, 96) for a movement which is generally radial with respect to a longitudinal axis (L) of the brewing chamber (1), and which, in the closed state, project into a depression (60; 60') on a counter piece (14; 14') and are in this case prevented from escaping outward by a detent (62; 62').

2. The brewing chamber as claimed in claim 1, **characterized in that** the detent (62; 62') can be moved, generally in the direction of the longitudinal axis (L), from a closing position in the closed state of the brewing chamber (1; 1') into an opening position and, in the opening position, enables the respective connecting element (58; 90) to escape outward.

3. The brewing chamber as claimed in claim 1 or 2, **characterized in that** the lower part (2; 2') has a side wall (14; 14'), on the outside of which the depressions (60; 60') are arranged.

4. The brewing chamber as claimed in claim 3, **characterized in that** the depressions are configured as a peripheral groove (60; 60') common to all the connecting elements (58; 90) and located in the side wall (14; 14') of the lower part (2; 2').

5. The brewing chamber as claimed in one of claims 1 to 4, **characterized in that** the connecting elements are configured as bodies (58) which are guided in each case in a guide (50, 52) for a movement which is generally radial with respect to the longitudinal axis (L) of the brewing chamber (1).

6. The brewing chamber as claimed in claim 5 in conjunction with claim 3 or 4, **characterized in that** the guides are configured as passage orifices (52) in a holder (50) which constitutes a component of the upper part (4) and which, in the closed state of the brewing chamber (1), at least partially covers the side wall (14) of the lower part (2).

7. The brewing chamber as claimed in claim 6, **characterized in that** the passage orifices (52) are narrowed radially inward (56) in order to prevent the bodies (58) from falling out inwardly.

8. The brewing chamber as claimed in claim 6 or 7 in conjunction with claim 2, **characterized in that** the detent (62) constitutes a component of the upper part (4) and is configured as a peripheral ring (34, 62) which is displaceable in relation to the holder (50), covers the outsides (54) of the passage orifices (52) in the closing position and in the opening position enables the bodies (58) to escape radially into an interspace (64).

9. The brewing chamber as claimed in claim 8, **characterized in that** the detent (62) is prestressed toward the opening position with respect to the holder (50) by spring action (42).

10. The brewing chamber as claimed in one of claims 5 to 9, **characterized in that** the bodies are balls (58) in the geometrically strict sense, which are guided in each case in a ball guide (50, 52) for a movement which is generally radial with respect to the longitudinal axis (L) of the brewing chamber (1).

11. The brewing chamber as claimed in one of claims 1 to 4, **characterized in that** the connecting elements are configured in each case as a tongue (90) with a fixed end and with a free end, the guide (94, 96) having a ring structure (94) as a mounting for the fixed ends of the tongues (90), and the free ends of the tongues (90) being provided in each case with a radially inward-pointing projection (92) which, in the closed state, projects into the depression (60') on the counter piece (14').

12. The brewing chamber as claimed in one of claims 1 to 11, **characterized in that** a pressure-resistant seal (48; 48') is provided between the upper part (4; 4') and the lower part (2; 2').

13. The brewing chamber as claimed in one of claims 1 to 12, **characterized in that** the upper part (4; 4') has a central lid region (38; 38'), from which at least one piercing pin (46; 46') projects downward.

14. The brewing chamber as claimed in one of claims 1 to 13, **characterized in that** the lower part (2; 2') has a bottom region (12), from which at least one piercing pin (22; 22'), which is preferably surrounded by a spring (28; 28'), projects upward.

15. The brewing chamber as claimed in one of claims 1 to 14, **characterized in that** the brewing chamber (1; 1') is set up for use with a portion capsule containing the brewing stock.

16. A brewing machine with a brewing chamber (1; 1') as claimed in one of claims 1 to 15 and with a hot-water device (78, 80) for the preparation of brewing water and for supplying the brewing water to the inlet (44; 44') of the brewing chamber (1; 1').

17. The brewing machine as claimed in claim 16 in conjunction with claim 2, **characterized in that** the brewing machine (70) has a lid (74) which can be moved from an operating state into an open state in which the upper part (4; 4') of the brewing chamber (1; 1') is lifted off from the lower part (2; 2') of the brewing chamber (1; 1') and the lower part (2; 2') of the brewing chamber (1; 1') is accessible, the lid (74) being coupled to the detent (62; 62') and, during transition from the operating state into the open state, moving the detent (62; 62') into the opening position.

18. The brewing machine as claimed in claim 17, **characterized by** a latching device which is designed for latching the lid (74) in the operating state.

## Revendications

1. Chambre de percolation pour percolateur, comprenant :
- une partie inférieure (2 ; 2') qui est aménagée pour recevoir la matière à infuser et une sortie (20 ; 20') pour la boisson infusée,
- une partie supérieure (4 ; 4') qui présente une entrée (44 ; 44') pour l'eau d'infusion et recouvre, à l'état fermé, la partie inférieure (2 ; 2'), et
- un dispositif de raccordement (50, 58, 60, 62 ; 94, 96, 90, 60', 62') qui est aménagé pour raccorder de manière à résister à la pression la partie inférieure (2 ; 2') à la partie supérieure (4 ; 4') à l'état fermé,
**caractérisée en ce que** le dispositif de raccordement présente un certain nombre d'éléments de raccordement (58 ; 90) qui sont respectivement guidés sur un entraînement (50, 52 ; 94, 96) pour effectuer un déplacement généralement radial par rapport à un axe longitudinal (L) de la chambre de percolation (1), font saillie, à l'état fermé, dans une cavité (60 ; 60') sur une pièce antagoniste (14 ; 14') et sont en l'occurrence empêchés de dévier vers l'extérieur par un organe d'arrêt (62 ; 62').

2. Chambre de percolation selon la revendication 1, **caractérisée en ce que** l'organe d'arrêt (62 ; 62') peut être déplacé de manière générale dans la direction de l'axe longitudinal (L) d'une position de fermeture à l'état fermé de la chambre de percolation (1 ; 1') à une position d'ouverture et qu'en position d'ouverture, une déviation de l'élément de raccordement respectif (58 ; 90) vers l'extérieur est autorisée.

3. Chambre de percolation selon la revendication 1 ou 2, **caractérisée en ce que** la partie inférieure (2 ; 2') présente une paroi latérale (14 ; 14') sur la face externe de laquelle les cavités (60 ; 60') sont ménagées.

4. Chambre de percolation selon la revendication 3, **caractérisée en ce que** les cavités se présentent sous la forme d'une rainure périphérique (60 ; 60') commune à tous les éléments de raccordement (58 ; 90) dans la paroi latérale (14 ; 14') de la partie inférieure (2 ; 2').

5. Chambre de percolation selon l'une quelconque des revendications 1 à 4, **caractérisée en ce que** les éléments de raccordement se présentent sous la forme de corps (58) qui sont respectivement guidés dans un entraînement (20, 52) pour un déplacement généralement radial par rapport à l'axe longitudinal (L) de la chambre de percolation (1).

6. Chambre de percolation selon la revendication 5 en rapport avec la revendication 3 ou 4, **caractérisée en ce que** les entraînements se présentent sous la forme d'ouvertures de passage (52) dans un support (50), qui représente un composant de la partie supérieure (4) et recouvre au moins partiellement la paroi latérale (14) de la partie inférieure (2) à l'état fermé de la chambre de percolation (1).

7. Chambre de percolation selon la revendication 6, **caractérisée en ce que** les ouvertures de passage (52) sont resserrées radialement vers l'intérieur (56) pour empêcher que les corps (58) ne tombent vers l'intérieur.

8. Chambre de percolation selon la revendication 6 ou 7 en rapport avec la revendication 2, **caractérisée en ce que** l'organe d'arrêt (62) représente un composant de la partie supérieure (4) et se présente sous la forme d'un anneau périphérique (34, 62), qui peut être déplacé par rapport au support (50), recouvre les faces extérieures (54) des ouvertures de passage (52) en position de fermeture et permet, en position d'ouverture, une déviation radiale des corps (58) vers un espace intermédiaire (64).

9. Chambre de percolation selon la revendication 8, **caractérisée en ce que** l'organe d'arrêt (62) est précontraint par rapport au support (50) par effet de ressort (42) vers la position d'ouverture.

10. Chambre de percolation selon l'une quelconque des revendications 5 à 9, **caractérisée en ce que** les corps sont des billes (58) au sens géométriquement étroit, qui sont respectivement guidées dans un entraînement à billes (50, 52) pour un déplacement généralement radial par rapport à l'axe longitudinal (L) de la chambre de percolation (1).

11. Chambre de percolation selon l'une quelconque des revendications 1 à 4, **caractérisée en ce que** les éléments de raccordement se présentent respectivement sous la forme d'une languette (90) avec une extrémité fixe et une extrémité libre, dans laquelle l'entraînement (94, 96) présente une structure annulaire (94) comme support pour les extrémités fixes des languettes (90) et les extrémités libres des languettes (90) sont respectivement pourvues d'une saillie (92) tournée radialement vers l'intérieur qui, à l'état fermé, s'avance dans la cavité (60') sur la pièce antagoniste (14').

12. Chambre de percolation selon l'une quelconque des revendications 1 à 11, **caractérisée en ce qu'**un joint étanche (48 ; 48') résistant à la pression est prévu entre la partie supérieure (4 ; 4') et la partie inférieure (2 ; 2').

13. Chambre de percolation selon l'une quelconque des revendications 1 à 12, **caractérisée en ce que** la partie supérieure (4 ; 4') présente une zone de couvercle centrale (38 ; 38') de laquelle au moins une pointe de perforation (46 ; 46') fait saillie vers le bas.

14. Chambre de percolation selon l'une quelconque des revendications 1 à 13, **caractérisée en ce que** la partie inférieure (2 ; 2') présente une zone de fond (12) de laquelle au moins une pointe de perforation (22 ; 22') fait saillie vers le haut, laquelle pointe de perforation est de préférence entourée d'un ressort (28 ; 28').

15. Chambre de percolation selon l'une quelconque des revendications 1 à 14, **caractérisée en ce que** la chambre de percolation (1 ; 1') est aménagée pour être utilisée avec une dosette contenant la matière à infuser.

16. Percolateur comprenant une chambre de percolation (1 ; 1') selon l'une quelconque des revendications 1 à 15 et un dispositif d'alimentation en eau chaude (78, 80) pour préparer de l'eau d'infusion et acheminer l'eau d'infusion à l'entrée (44 ; 44') de la chambre de percolation (1 ; 1').

17. Percolateur selon la revendication 16 en rapport avec la revendication 2, **caractérisé en ce que** le percolateur (70) présente un couvercle (74) qui peut être déplacé d'un état de fonctionnement à un état d'ouverture, dans lequel la partie supérieure (4 ; 4') de la chambre de percolation (1 ; 1') est soulevée de la partie inférieure (2 ; 2') de la chambre de percolation (1 ; 1') et la partie inférieure (2 ; 2') de la chambre de percolation (1 ; 1') est accessible, dans lequel le couvercle (74) est couplé à l'organe d'arrêt (62 ; 62') et, lors du déplacement de l'état de fonctionnement à l'état d'ouverture, déplace l'organe d'arrêt (62 ; 62') en position d'ouverture.

18. Percolateur selon la revendication 17, **caractérisé par** un dispositif de verrouillage qui est agencé de manière à enclencher le couvercle (74) en position de fonctionnement.
